# FASCICULE DE BREVET EUROPEEN

(11) **EP 1 483 990 B1**
(45) Date de publication et mention de la délivrance du brevet: **19.11.2008**
(21) Numéro de dépôt: 04356086.1
(22) Date de dépôt: 02.06.2004
(51) Int. Cl.: A47J 31/057, A47J 31/44

(54) **Cafetière filtre avec étanchéité entre le couvercle et le boîtier**
Filterkaffeemaschine mit Dichtung zwischen Deckel und Gehäuse
Filtercoffeemachine with gasket between lid and housing

(30) Priorité: 06.06.2003 FR 0306862
(43) Date de publication de la demande: 08.12.2004
(73) Titulaire: SEB S.A., 69130 Ecully (FR)
(72) Inventeur: Dominguez, Augustin, 6500 Tarbes (FR)
(74) Mandataire: Kiehl, Hubert

(56) Documents cités:
- US-A- 4 969 392
- US-A- 5 676 041
- US-A1- 2002 035 929
- US-B1- 6 405 637

## Description

La présente invention se rapporte au domaine technique général des machines à boissons chaudes telles que les cafetières filtre. La présente invention concerne plus particulièrement les appareils comportant un couvercle dans lequel est agencé un conduit de distribution d'eau chaude.

Il est connu du document WO 00/36957 de réaliser une cafetière filtre comportant un conduit de distribution d'eau chaude comprenant une première partie agencée dans un boîtier et une deuxième partie agencée dans un couvercle monté pivotant sur le boîtier. Le couvercle ferme la partie supérieure du boîtier comportant un porte filtre ainsi qu'un réservoir d'eau. Le réservoir d'eau est agencé sur l'arrière de la face supérieure du boîtier, et le porte filtre est agencé sur l'avant de la face supérieure du boîtier.

Une cafetière filtre selon les caractéristiques du préambule de la revendication 1 ou de la revendication 7 est connue du document US 6 405 637.

L'objet de la présente invention est d'améliorer l'ergonomie d'une cafetière filtre comportant un couvercle pivotant dans lequel est agencé un conduit de distribution d'eau chaude.

Cet objet est atteint avec une cafetière filtre selon la revendication 1 comportant un compartiment de préparation de la boisson ménagé dans la face supérieure d'un boîtier, un couvercle articulé sur le boîtier, le couvercle présentant une ouverture pour l'écoulement de l'eau chaude, l'ouverture étant reliée à une chaudière agencée dans le boîtier, l'ouverture étant disposée au dessus du compartiment lorsque le couvercle est rabattu sur le boîtier, la paroi annulaire du boîtier étant agencée autour de la paroi annulaire du couvercle, du fait que la zone annulaire de rétention d'eau est délimitée latéralement d'une part par la paroi annulaire du boîtier et d'autre part par la paroi annulaire du couvercle, et en ce que la paroi annulaire du boîtier présente une pente moins inclinée que la paroi annulaire du couvercle. Avantageusement alors, la zone de rétention d'eau est tronconique. Cette disposition évite que la vapeur s'échappe entre le couvercle et le boîtier lors de la préparation de la boisson. De ce fait, la condensation sous le couvercle à l'extérieur de la zone annulaire de rétention d'eau peut être très fortement réduite, voire complètement éliminée. Ceci évite les retombées de condensats sur le plan de travail lors de la manipulation du couvercle. Le couvercle peut offrir une surface supérieure à la surface du compartiment de préparation de la boisson sans présenter les inconvénients précités.

Cet objet est atteint aussi avec une cafetière filtre selon la revendication 7 comportant un compartiment de préparation de la boisson ménagé dans la face supérieure d'un boîtier, un couvercle articulé sur le boîtier, le couvercle présentant une ouverture pour l'écoulement de l'eau chaude, l'ouverture étant reliée à une chaudière agencée dans le boîtier, l'ouverture étant disposée au dessus du compartiment lorsque le couvercle est rabattu sur le boîtier, la paroi annulaire du boîtier étant agencée autour de la paroi annulaire du couvercle, du fait que la paroi annulaire du boîtier forme une rigole annulaire, la paroi annulaire du couvercle formant une nervure annulaire plongeant dans ladite rigole annulaire, la paroi annulaire du boîtier et la paroi annulaire du couvercle délimitant la zone annulaire de rétention d'eau. Le joint d'eau se forme alors dans la rigole annulaire. Cette disposition évite que la vapeur s'échappe entre le couvercle et le boîtier lors de la préparation de la boisson. De ce fait, la condensation sous le couvercle à l'extérieur de la zone annulaire de rétention d'eau peut être très fortement réduite, voire complètement éliminée. Ceci évite les retombées de condensats sur le plan de travail lors de la manipulation du couvercle. Le couvercle peut offrir une surface supérieure à la surface du compartiment de préparation de la boisson sans présenter les inconvénients précités.

Selon une forme de réalisation avantageuse, le compartiment de préparation de la boisson forme un logement de porte filtre dans lequel est logé un porte filtre. Cette disposition permet de faciliter la préparation de la boisson ainsi que le nettoyage du compartiment de préparation de la boisson. En alternative, le porte filtre peut être formé dans ledit compartiment de préparation de la boisson.

La zone annulaire de rétention d'eau est alors formée entre le couvercle et le porte filtre. Avantageusement alors la zone annulaire de rétention d'eau est formée entre un bossage inférieur du couvercle et une paroi intérieure du porte filtre. En alternative, la zone annulaire de rétention d'eau peut notamment être formée entre une nervure annulaire de la face inférieure du couvercle et une paroi intérieure du porte filtre, ou entre ladite nervure et une paroi extérieure du porte filtre, ou entre ladite nervure et une rigole annulaire ménagée sur le bord supérieur du porte filtre.

En alternative, la zone annulaire de rétention d'eau peut être formée entre le couvercle et le logement de porte filtre. La zone annulaire de rétention d'eau peut notamment être formée entre une nervure annulaire de la face inférieure du couvercle et une paroi extérieure du logement de porte filtre, ou entre ladite nervure et une rigole annulaire ménagée autour du logement de porte filtre.

Avantageusement encore une douchette agencée dans le couvercle comporte une ouverture de sortie agencée en regard de l'ouverture du couvercle. Cette disposition permet de réduire la température de la face inférieure du couvercle et contribue à faciliter la formation d'un joint d'eau dans la zone annulaire de rétention d'eau.

Avantageusement alors la douchette comporte une chambre d'évacuation de vapeur agencée autour d'une chambre de sortie dans laquelle est ménagée l'ouverture de sortie, la chambre d'évacuation de vapeur comportant une ouverture d'entrée de vapeur agencée sur la face inférieure du couvercle et une ouverture de sortie de vapeur. Cette disposition permet de réduire encore davantage la température de la face inférieure du couvercle, notamment à l'intérieur de la zone annulaire de rétention d'eau. Ceci favorise la condensation, qui permet la formation du joint d'eau, contre la face intérieure du couvercle à l'intérieur de la zone annulaire de rétention d'eau.

Avantageusement alors, la chambre de sortie d'eau chaude est reliée à la chambre d'évacuation de vapeur par un passage de vapeur. Cette disposition permet une séparation de la vapeur dans la douchette et contribue à limiter la quantité de vapeur présente dans le compartiment de préparation de la boisson.

Selon une disposition avantageuse, la face supérieure du boîtier comporte un logement de filtres agencé à l'extérieur de la zone annulaire de rétention d'eau. Grâce au joint d'eau formé entre le couvercle et le boîtier dans la zone annulaire de rétention d'eau, les filtres en papier rangés dans le logement de filtres peuvent être préservés de l'humidité. Le couvercle peut être rabattu sur le logement de filtres.

Selon une disposition avantageuse, la cafetière filtre comporte un réservoir d'eau alimentant la chaudière. Le réservoir d'eau peut être solidaire du boîtier. Le réservoir d'eau peut aussi être amovible par rapport au boîtier. Le couvercle peut être rabattu sur le réservoir d'eau. En alternative, la cafetière peut être alimentée par un conduit.

Avantageusement alors le compartiment de préparation de la boisson est agencé entre le logement de filtres et le réservoir d'eau. Cette disposition facilite le remplissage du réservoir d'eau sans risque de mouiller les filtres.

Avantageusement alors, une embouchure de remplissage est ménagée dans la face supérieure du boîtier au dessus du réservoir d'eau. En alternative, l'embouchure de remplissage peut appartenir au réservoir d'eau, le réservoir d'eau étant alors de préférence amovible.

Avantageusement alors, le compartiment de préparation de la boisson est agencé entre le logement de filtres et l'embouchure de remplissage. Cette disposition facilite le remplissage du réservoir d'eau sans risque de mouiller les filtres.

Avantageusement encore, le couvercle comporte une articulation sur le boîtier adjacente à l'embouchure de remplissage et au logement de filtres. Cette disposition permet une présentation particulièrement ergonomique. Le couvercle peut être monté sur le boîtier par son grand côté. L'utilisateur peut accéder aisément aux différents éléments de la cafetière.

Avantageusement alors l'embouchure de remplissage est agencée à l'extérieur de la zone annulaire de rétention d'eau. Cette disposition permet de séparer le volume d'air du compartiment de préparation de la boisson du volume d'air du réservoir d'eau, la communication s'effectuant seulement par la douchette.

Avantageusement encore, un logement d'accessoire est agencé entre un conduit ascendant issu de la chaudière et le compartiment de préparation de la boisson, le logement d'accessoire étant agencé à l'extérieur de la zone annulaire de rétention d'eau. Pour favoriser la séparation de l'eau chaude et de la vapeur dans la douchette et permettre une bonne évacuation de vapeur par une ou plusieurs ouvertures de sortie de vapeur ménagées dans le couvercle, un espacement minimum est nécessaire entre l'ouverture d'entrée et l'ouverture de sortie de la douchette. La présente disposition permet d'utiliser ledit espacement sans augmenter l'encombrement de l'appareil, tout en protégeant le logement d'accessoire de la condensation.

Avantageusement encore, le logement d'accessoire est agencé au dessus du réservoir d'eau, le logement d'accessoire étant agencé à l'extérieur de la zone annulaire de rétention d'eau. Cette disposition permet une meilleure compacité de l'appareil, tout en protégeant le logement d'accessoire de la condensation.

L'invention sera mieux comprise à l'étude d'un exemple de réalisation, pris à titre nullement limitatif, et de variantes, illustrés dans les figures annexées, dans lesquelles :
- la figure 1 est une section verticale longitudinale d'une cafetière filtre selon l'invention, le couvercle étant rabattu sur le boîtier,
- la figure 2 est une vue en perspective couvercle relevé de la partie supérieure de la cafetière filtre illustrée à la figure 1,
- la figure 3 est une section verticale transversale de la cafetière filtre illustrée aux figures 1 et 2, le couvercle étant rabattu sur le boîtier,
- la figure 4 est une vue partielle en perspective couvercle fermé d'une section transversale du couvercle de la cafetière illustrée aux figures 1 à 3,
- la figure 5 est une vue schématique partielle agrandie de la partie supérieure de la cafetière illustrée à la figure 1,
- la figure 6 représente un détail de la figure 5, avant un fonctionnement de la cafetière,
- la figure 7 représente un détail de la figure 5, lors d'un fonctionnement de la cafetière,
- la figure 8 est une vue en perspective du porte filtre de la cafetière filtre illustrée aux figures 1 et 2,
- la figure 9 est une vue partielle en coupe de la partie inférieure du logement de porte filtre et du porte filtre illustré à la figure 8,
- la figure 10 est une vue de la partie inférieure du logement de porte filtre illustré à la figure 9,
- la figure 11 est une vue sous un autre angle d'un détail de la partie inférieure du logement de porte filtre illustré à la figure 10.
- les figures 12, 13 et 14 représentent 3 variantes de réalisation.

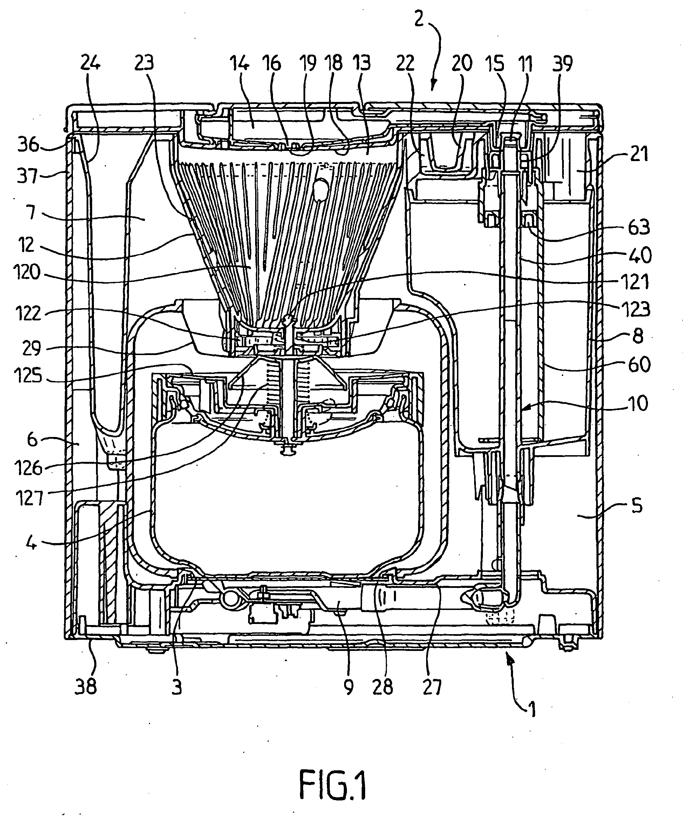

La cafetière filtre illustrée à la figure 1 comporte un boîtier 1 fermé par un couvercle 2. Le boîtier 1 présente un socle 3 prévu pour recevoir une verseuse 4. Le boîtier 1 forme un premier montant 5 et un deuxième montant 6 de part et d'autre du socle 3. Le premier montant 5 et le deuxième montant 6 sont réunis par une arche 7 au dessus du socle 3. Un réservoir d'eau 8 est agencé dans le boîtier 1. Le réservoir d'eau 8 est relié à une chaudière 9 agencée dans le boîtier 1. Le réservoir d'eau 8 est agencé partiellement dans le premier montant 5. La chaudière 9 est disposée dans le socle 3. La chaudière 9 est reliée à un conduit ascendant 10 de montée d'eau chaude.

Le conduit ascendant 10 est muni dans sa partie supérieure d'un orifice de sortie d'eau chaude 11. Le conduit ascendant 10 est disposé partiellement dans le réservoir d'eau 8. Le boîtier 1 comprend un logement de porte filtre 12 et un porte filtre 13. Le logement de porte filtre 12 est agencé dans l'arche 7. Le porte filtre 13 est disposé dans le logement de porte filtre 12. Une douchette 14 est agencée dans le couvercle 2. La douchette 14 comporte une ouverture d'entrée 15 communiquant avec une ouverture de sortie 16. Le conduit ascendant 10 est relié à l'ouverture d'entrée 15 lorsque le couvercle 2 ferme le boîtier 1. L'ouverture de sortie 16 est alors disposée au dessus du porte filtre 13.

Le porte filtre 13 comprend un cône filtre 120 muni de rainures internes, un clapet d'obturation inférieur 121 et des moyens de retenue supérieurs 122. Le clapet d'obturation inférieur 121 est associé à un moyen de rappel 123. La verseuse 4 comporte une pièce d'obturation supérieure 125 munie d'un clapet de remplissage 126 coopérant avec le clapet d'obturation inférieur 121 lorsque la verseuse 4 est en place sur le socle 3. Le clapet de remplissage 126 est associé à un autre moyen de rappel 127.

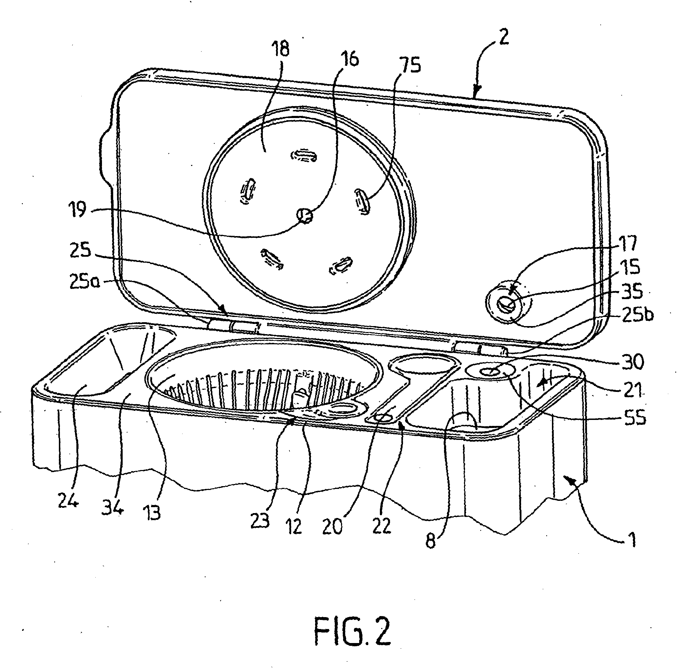

Tel que mieux visible à la figure 2, le couvercle 2 est articulé sur le boîtier 1. Le réservoir d'eau 8 présente une ouverture dans la face supérieure du boîtier 1. La face inférieure du couvercle 2 présente une protubérance inférieure 17, dans laquelle est ménagée l'ouverture d'entrée 15 de la douchette 14, et un bossage inférieur 18, comportant une ouverture 19 pour l'écoulement de l'eau chaude agencée en regard de l'ouverture de sortie 16 de la douchette 14.

Une embouchure de remplissage 21 est ménagée dans la face supérieure du boîtier 1 au dessus du réservoir d'eau 8. L'embouchure de remplissage 21 est agencée dans le premier montant 5. Un logement d'accessoire 22 est ménagé dans la face supérieure du boîtier 1 à coté de l'ouverture de remplissage 21. Le logement d'accessoire 22 est prévu pour recevoir une dosette 20. Le logement d'accessoire 22 est agencé dans l'arche 7 au dessus du réservoir d'eau 8. Un compartiment 23 pour la préparation de la boisson est ménagé dans la face supérieure du boîtier 1 à côté du logement d'accessoire 22. Le compartiment 23 forme le logement de porte filtre 12. Le compartiment 23 est agencé dans l'arche 7 au dessus de la verseuse 4. Un logement de filtres 24 est ménagé dans la face supérieure du boîtier 1 à côté du compartiment 23. Le logement de filtres 24 est agencé dans le deuxième montant 6.

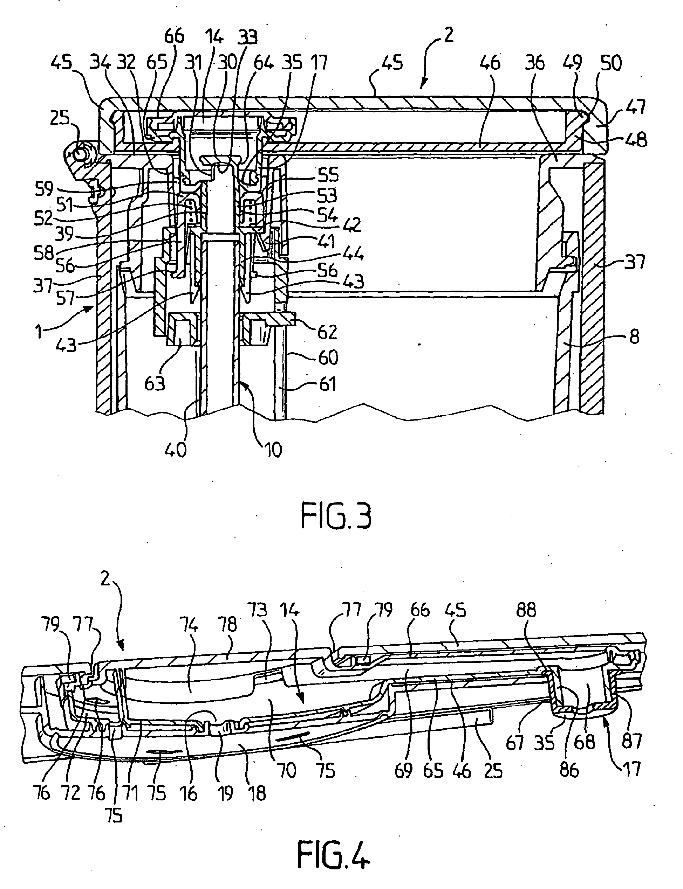

Tel que mieux visible à la figure 3, le conduit ascendant 10 comporte une extrémité supérieure 30 fermée en sa partie supérieure et un orifice 31 débouchant en regard d'une paroi latérale 32 du boîtier 1. Plus particulièrement, le conduit ascendant 10 présente une paroi interne supérieure 33 inclinée vers le bas en direction de l'orifice 31. L'orifice 31 est latéral. L'extrémité supérieure 30 du conduit ascendant 10 se situe au niveau d'une paroi supérieure 34 du boîtier 1. La paroi supérieure 34 forme une partie de la face supérieure du boîtier 1. La paroi supérieure 34 est de préférence plane. La protubérance inférieure 17 comporte un joint à lèvres 35. Le joint à lèvres 35 est agencé autour de l'ouverture d'entrée 15 de la douchette 14. Le joint à lèvres 35 forme la partie inférieure de la protubérance inférieure 17.

Le boîtier 1 présente une face supérieure formée par un support 36 auquel appartient la paroi latérale 32. L'embouchure 21, le logement d'accessoire 22, le compartiment 23 et le logement de filtres 24 sont ménagés dans le support 36. Le réservoir d'eau 8 est maintenu entre le support 36 et une pièce 27. La pièce 27 est assemblée avec le support 36 au moyen de vis, non montrées au figures. La pièce 27 sert également à maintenir un plateau chauffant 28 en contact avec la chaudière 9. Le support 36 est monté sur une jupe 37. La partie inférieure de la jupe 37 est fermée par une base 38, visible à la figure 1. La base 38 est assemblée avec la pièce 27 au moyen de vis, non montrées au figures. Une coupelle 29 est suspendue dans la paroi inférieure du support 36 au dessus du plateau chauffant 28. La coupelle 29 permet de loger la partie inférieure du logement de porte filtre 12.

L'orifice 31 du conduit ascendant 10 est réalisé dans un capuchon 39 solidaire du boîtier 1. Le capuchon 39 est par exemple réalisé en polycarbonate. Le capuchon 39 est monté sur un tube de montée d'eau chaude 40. Le tube de montée d'eau chaude 40 est par exemple réalisé en polypropylène. Le tube de montée d'eau chaude 40 est avantageusement issu du fond du réservoir d'eau 8. Le capuchon 39 et le tube de montée d'eau chaude 40 appartiennent au conduit ascendant 10. Le capuchon 39 est fixé au support 36. Plus particulièrement, le support 36 comporte des crochets élastiques 41, dont l'un est visible à la figure 3, venant en prise avec une collerette 42 du capuchon 39, et d'autres crochets élastiques 43, venant en prise avec une partie inférieure tubulaire 44 du capuchon 39. La partie inférieure tubulaire 44 est agencée sous la collerette 42. La partie inférieure tubulaire 44 est montée autour du tube de montée d'eau chaude 40 en ménageant un jeu d'extrémité 89. Cette disposition permet la dilatation du tube de montée d'eau chaude 40.

Le couvercle 2 présente une paroi supérieure 45 présentant une articulation 25 avec la jupe 37 du boîtier 1. Tel que mieux visible à la figure 2, l'articulation 25 comporte deux charnières 25a, 25b. Tel que mieux visible à la figure 3, l'orifice 31 est agencé du côté de l'articulation 25 du couvercle 2 sur le boîtier 1.

L'articulation 25 est adjacente à l'embouchure de remplissage 21 et au logement de filtres 24.

La paroi supérieure 45 du couvercle 2 est assemblée avec une paroi inférieure 46. La paroi supérieure 45 présente un rebord périphérique inférieur 47. La paroi inférieure 46 présente un rebord périphérique supérieur 48. Des ergots 49 ménagés sur la face externe du rebord périphérique supérieur 47 sont prévus pour coopérer avec des encoches 50 ménagées sur la face interne du rebord périphérique inférieur 46.

Un déflecteur mobile 51 est monté contre un moyen de rappel 52 autour de l'extrémité supérieure du conduit ascendant 10. Plus particulièrement, le déflecteur mobile 51 est monté contre le moyen de rappel 52 autour du capuchon 39. Le moyen de rappel 52 est formé par exemple par un ressort hélicoïdal.

Le capuchon 39 présente une partie supérieure cylindrique 53 creuse communiquant avec la partie inférieure tubulaire 44. L'orifice 31 est ménagé dans la partie supérieure cylindrique 53. Le déflecteur mobile 51 comporte des languettes de guidage 54 coulissant autour de la partie supérieure cylindrique 53 du capuchon 39. Les languettes de guidage 54 sont issues d'une face supérieure 55 du déflecteur mobile 51. La largeur des languettes de guidage 54 est inférieure à la largeur de l'orifice 31. Le déflecteur mobile 51 comporte également des languettes de retenue 56 munies de crochets 57. Les languettes de retenue 56 sont montées dans des ouvertures 58 du capuchon 39.

Le support 36 présente un puits 59 dans lequel est agencée l'extrémité supérieure 30 du conduit ascendant 10. La paroi latérale 32 est ménagée dans le puits 59.

Le capuchon 39 comporte une paroi 60 plongeant dans le réservoir d'eau 8. La paroi 60 présente une découpe 61 dans laquelle coulisse une languette 62 appartenant à un flotteur 63 monté autour du tube de montée d'eau chaude 40.

La douchette 14 est logée entre la paroi inférieure 46 du couvercle 2 et la paroi supérieure 45 du couvercle 2. Tel que mieux visible à la figure 4, la douchette 14 comporte une goulotte 65 et un capot 66. La goulotte 65 comporte une partie tubulaire inférieure 86 appartenant à la protubérance inférieure 17. A cet effet, la paroi inférieure 46 du couvercle 2 présente un passage 67. Le joint à lèvres 35 comporte un montant tubulaire 87 monté autour de la partie tubulaire inférieure 86, et une collerette supérieure 88 maintenue entre la goulotte 65 et la paroi inférieure 46 du couvercle 2. Le bossage inférieur 18 appartient à la paroi inférieure 46.

La douchette 14 comprend une chambre d'entrée 68, ménagée dans la protubérance inférieure 17, débouchant latéralement à son sommet vers un conduit 69 de séparation eau/vapeur, légèrement descendant, le conduit 69 débouchant dans la paroi latérale d'une chambre de sortie 70. La chambre de sortie 70 présente dans sa partie inférieure une cuvette 71. L'ouverture 16 est agencée au centre de la cuvette 71. Une chambre d'évacuation de vapeur 72 est agencée autour de la chambre de sortie 70. A cet effet des passages de vapeur 73 sont ménagés dans la partie supérieure de la chambre de sortie 70. Plus particulièrement, les passages de vapeur 73 sont ménagés dans une paroi interne 74 du capot 66. La chambre d'évacuation de vapeur 72 présente des ouvertures d'entrée de vapeur 75 ménagées dans la paroi inférieure 46 et la goulotte 65. La chambre d'évacuation de vapeur 72 présente des ouvertures de sortie de vapeur 76 ménagées dans le capot 66. La paroi supérieure 45 présente une découpe 77 dans laquelle est agencé un bossage supérieur 78 du capot 66. Le bossage supérieur 78 et la paroi supérieure 45 sont sensiblement au même niveau. Un joint annulaire 79 est agencé entre le capot 66 et la paroi supérieure 45 autour du bossage supérieur 78, des ouvertures de sortie de vapeur 76 et de la découpe 77.

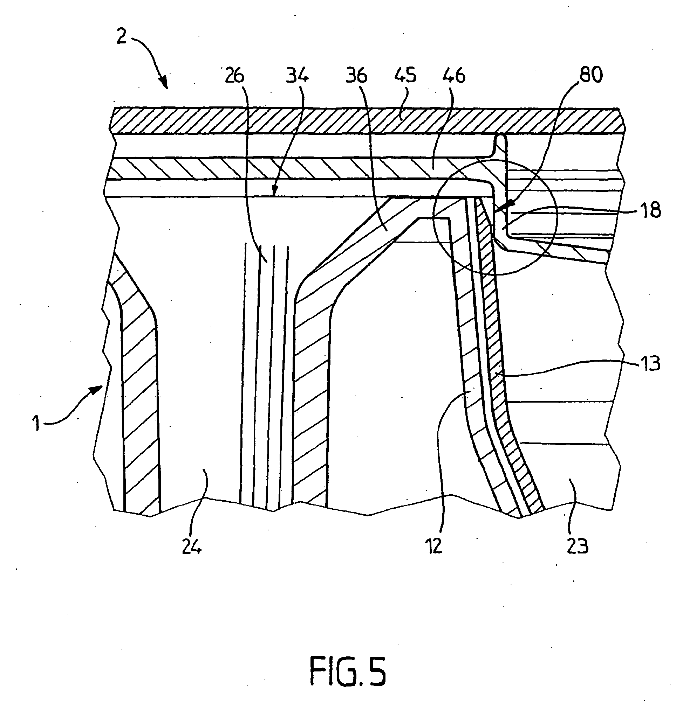

La figure 5 montre la partie supérieure de la cafetière dans la région du compartiment 23 de préparation de la boisson et du logement de filtres 24 recevant des filtres en papier 28, la douchette 14 n'étant pas représentée. Une zone annulaire de rétention d'eau 80 est agencée entre la partie supérieure du boîtier 1 et la partie inférieure du couvercle 2 autour du porte filtre 13. Le logement de filtres 24, le logement d'accessoire 22 et l'embouchure 21, visibles à la figure 2, sont agencés à l'extérieur de la zone annulaire de rétention d'eau 80.

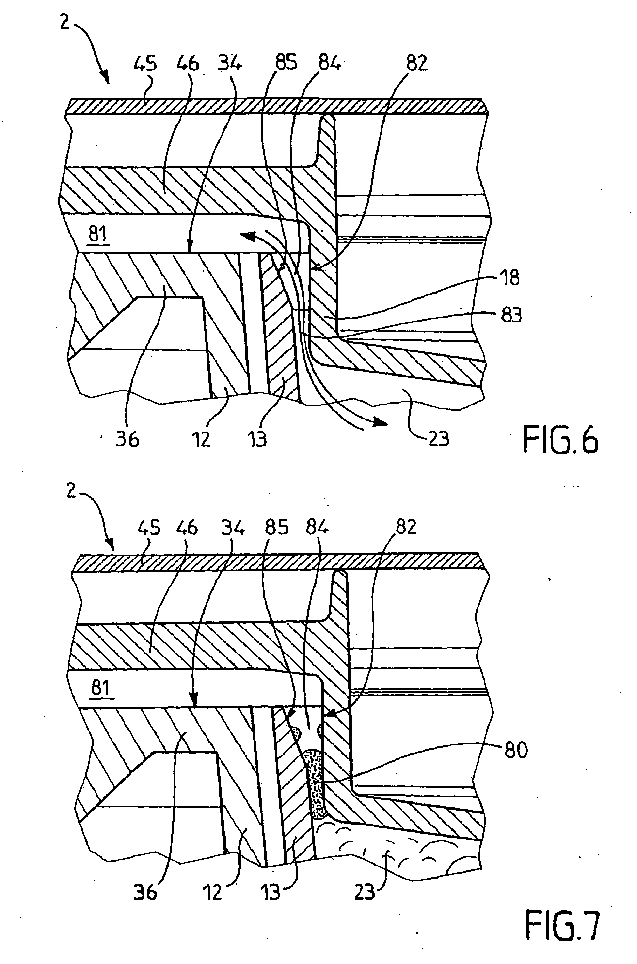

Tel que mieux visible aux figures 6 et 7, la zone annulaire de rétention d'eau 80 est ménagée entre le bossage inférieur 18 du couvercle 2 et la paroi intérieure du porte filtre 13. Lorsque le couvercle 2 est fermé, un jeu 81 subsiste entre la paroi supérieure 34 du boîtier 1 et la paroi inférieure 46 du couvercle 2. Le bossage 18 présente une forme épaulée cylindrique 82 pénétrant avec jeu dans la partie supérieure du logement de porte filtre 12 dans laquelle est placé le porte filtre 13.

Pour garantir une bonne adhésion des gouttelettes d'eau, le bossage inférieur 18 et/ou la partie supérieure du porte filtre 13 sont réalisées en matériau présentant une bonne mouillabilité, de préférence supérieure à 0,04 N/m. Des surfaces rugueuses, obtenues par exemple par grainage, ou encore dépolies, peuvent procurer une meilleure mouillabilité. Le porte filtre 13 est par exemple réalisé en polypropylène. La paroi inférieure 46 du couvercle 2 est par exemple réalisée en polycarbonate.

Une cheminée annulaire 83 est ainsi ménagée entre la forme épaulée cylindrique 82 du bossage 18 et la paroi intérieure du porte filtre 13. Une chambre de détente 84 est ménagée dans la partie supérieure de la cheminée annulaire 83. La chambre de détente 84 est obtenue avec un chanfrein 85 sur le sommet de la paroi intérieure du porte filtre 13.

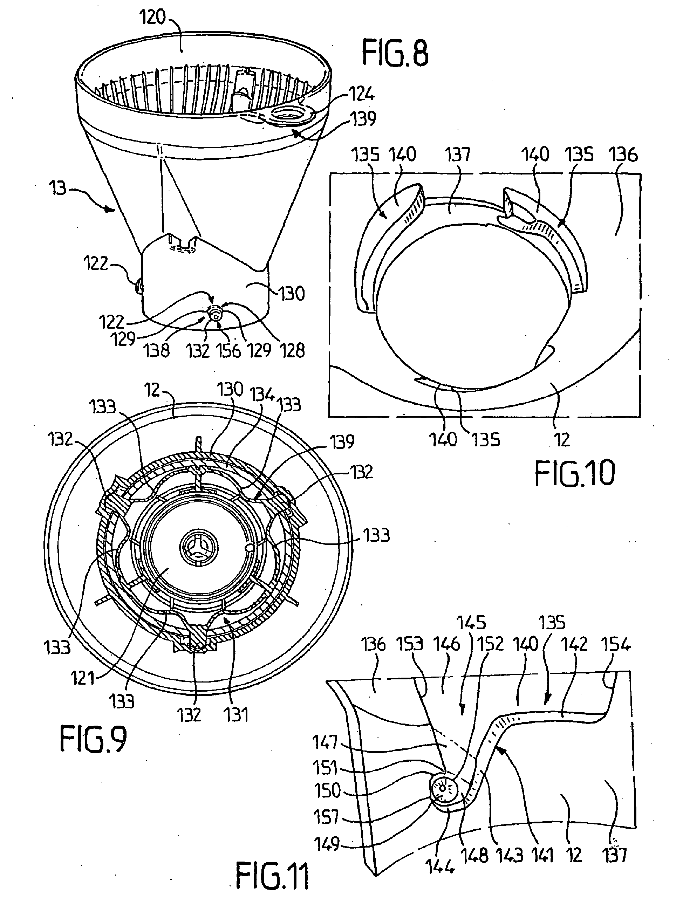

La figure 8 montre le porte filtre 13. Une poignée 124 est agencée au niveau du bord supérieur du cône filtre 120. Le cône filtre 120 est prolongé en son extrémité inférieure par une paroi cylindrique 130 sur laquelle sont ménagées des nervures 128 formant les moyens de retenue supérieurs 122. Le cône filtre 120 comporte trois nervures 128 réparties sur la périphérie de la paroi cylindrique 130. Chaque nervure 128 présente des bords latéraux 129 inclinés. Sous chaque nervure 128 est monté un ergot 132.

Tel que mieux visible à la figure 9, les ergots 132 sont issus d'une pièce de verrouillage 131. Les ergots 132 sont ménagés sur des languettes élastiques 133 reliées à une couronne 134 de la pièce de verrouillage 131. Les deux extrémités des languettes élastiques 133 sont reliées à la couronne 134. La couronne 134 est montée à l'intérieur de la paroi cylindrique 130 du cône filtre 120. Les ergots 132 sortent à l'extérieur de la couronne 134 grâce à des passages ménagés dans la paroi latérale externe de la couronne 134. Le clapet d'obturation inférieur 121 est monté à l'intérieur de la couronne 134.

Tel que montré à la figure 10, le logement de porte filtre 12 présente une partie supérieure tronconique 136 prolongée par une partie inférieure cylindrique 137. Trois conformations concaves 135 prévues pour recevoir les moyens de retenue 122 sont agencées à la jonction de la partie supérieure tronconique 136 et de la partie inférieure cylindrique 137.

Tel que montré à la figure 11, chaque conformation concave 135 présente une entrée supérieure 140, une zone d'appui inférieure 141 comprenant une partie supérieure 142, une partie inclinée 143 et une partie inférieure 144, la partie inclinée 143 étant reliée d'une part à la partie supérieure 142 et d'autre part à la partie inférieure 144. Les entrées supérieures 140 débouchent dans la partie supérieure tronconique 136. Les ergots 132 forment des moyens de guidage 156 prévus pour coopérer avec la zone d'appui inférieure 141.

Chaque conformation concave 135 présente un renfoncement 145 présentant une zone d'accueil supérieure 146, une zone inclinée 147 et une zone de retenue inférieure 148. Les ergots 132 forment des moyens d'appui latéraux 138. Les languettes élastiques 133 forment des moyens de rappel 139 pour les moyens d'appui latéraux 138. Dans les zones d'accueil supérieures 146, les moyens d'appui latéraux 138 ne sont pas en contact avec les parois latérales du logement de porte filtre 12. Les moyens d'appui latéraux 138 viennent en contact avec les parois latérales du logement de porte filtre 12 dans les zones de transition intermédiaires 147 et restent en contact avec les parois latérales du logement de porte filtre 12 dans les zones de retenue inférieures 148, pour assurer un bon maintien du porte filtre 13.

Une cavité 149 à parois chanfreinées est ménagée dans chaque zone de retenue inférieure 148. Une zone d'appui supérieure 150 est ménagée au dessus de chaque partie inférieure 144. Un seuil de blocage 152 est ménagé entre chaque cavité 149 et chaque zone inclinée 147. Chaque renfoncement 145 comporte deux parois latérales 153, 154. Chaque paroi latérale 153 rejoint l'un des seuils de retenue 151. Chaque autre paroi latérale 154 rejoint la partie supérieure 142. Les parois latérales 153, 154 sont avantageusement inclinées vers les entrées supérieures 140. Chaque paroi latérale 154 est prolongée à son extrémité inférieure par l'une des zones d'appui supérieures 150. Un seuil de retenue 151 est ménagé entre chaque zone d'appui supérieure 150 et chaque paroi latérale 153. Une butée latérale 157 relie la partie inférieure 144 de la zone d'appui inférieure 141 à la zone d'appui supérieure 150.

La poignée 124 forme un moyen d'appui supérieur 155 sur le boîtier 1 et permet de bloquer en translation verticale le porte filtre 13 dans le logement de porte filtre 12.

La cafetière selon l'invention fonctionne de la manière suivante.

Lorsque le couvercle 2 occupe une position rabattue sur le boîtier 1, tel que représenté aux figures 1 et 3, l'ouverture d'entrée 15 de la douchette 14 est amenée en communication avec l'orifice de sortie d'eau chaude 11 du tube ascendant 10 et l'ouverture de sortie 16 de la douchette 14 débouche au dessus du logement de porte filtre 12. La protubérance inférieure 17 repousse le déflecteur mobile 51. Le joint à lèvres 35 agencé autour de l'ouverture d'entrée 15 coiffe l'extrémité supérieure 30 du conduit ascendant 10 comportant l'orifice 31. Ainsi l'ouverture 19 du couvercle 2 est reliée à la chaudière 9.

Le jeu entre la forme épaulée cylindrique 82 du bossage inférieur 18 du couvercle 2 et le porte filtre 13 permet la communication entre le volume d'air du porte filtre 13 et le volume d'air de l'espace entre la face supérieure du boîtier 1 et la face inférieure du couvercle 2.

Le porte filtre 13 est maintenu dans le logement de porte filtre 12 grâce aux moyens de retenue supérieurs 122, aux moyens d'appui latéraux 138, et au moyen d'appui supérieur 155.

Lorsque la cafetière fonctionne, l'eau chaude issue du conduit ascendant 10 est transférée dans la douchette 14 sans écoulement dans le réservoir 8 grâce au joint à lèvres 35.

L'eau chaude et la vapeur se séparent dans le conduit 69 et la chambre de sortie 70. La vapeur issue de la chaudière 9 s'échappe par les passages de vapeur 73 pour rejoindre la chambre d'évacuation de vapeur 72. La vapeur issue du logement de porte filtre 12 rentre par les ouvertures d'entrée de vapeur 75 pour rejoindre la chambre d'évacuation de vapeur 72. La vapeur collectée dans la chambre d'évacuation de vapeur 72 sort par les ouvertures de sortie de vapeur 76. L'eau chaude sort par l'ouverture de sortie 16 de la douchette 14 agencée en regard de l'ouverture 19 du boîtier 1, et s'écoule dans le porte filtre 13.

La cavité du porte filtre 13 se sature en vapeur. La vapeur s'échappe alors par les ouvertures d'entrées de vapeur 75 du bossage inférieur 18 mais aussi par la cheminée annulaire 83. Au contact de l'air froid contenu dans la cheminée annulaire 83 et des parois de la cheminée annulaire 83 plus froide que la vapeur, ladite vapeur se condense en micro-gouttelettes d'eau. La douchette 14 formée par des parois distinctes de la paroi inférieure 46 du couvercle permet de limiter la température de paroi inférieure 46 lorsque l'eau chaude s'écoule dans la douchette 14, et permet notamment de limiter la température du bossage 18. La chambre d'évacuation de vapeur 72 disposée en périphérie du bossage inférieur 18 à distance de la forme épaulée cylindrique 82 permet de limiter l'élévation de la température de la forme épaulée cylindrique 82 lorsque l'eau chaude s'écoule dans la douchette 14.

Lorsque les parois de la cheminée annulaire 83 sont saturées, une coalescence des micro-gouttelettes d'eau se produit. Les micro-gouttelettes d'eau se regroupent jusqu'à créer un film homogène qui se dépose dans la zone annulaire de rétention d'eau 80 et obturent la cheminée annulaire 83. La vapeur contenue dans le porte filtre 13 s'échappe alors exclusivement par les ouvertures d'entrée de vapeur 75. La géométrie de la cheminée annulaire 83 avec la chambre de détente supérieure 84 facilite la formation du joint liquide et contribue à maintenir en suspension la colonne d'eau réalisant le joint liquide.

Le joint liquide réalisé lors du fonctionnement de la cafetière empêche la vapeur de se propager entre la partie inférieure du couvercle 2 et la partie supérieure du boîtier 1. Les filtres en papier 28 disposés dans le logement de filtres 24 sont préservés de l'humidité. Il n'est pas nécessaire de rajouter un joint d'étanchéité annulaire sur le porte filtre 13, ou autour du logement de porte filtre 12, ou sous le couvercle 2.

Lorsque l'utilisateur relève le couvercle 2, l'eau du joint liquide disposé dans la zone annulaire de rétention d'eau 80 s'écoule dans le porte filtre 13.

Lorsque la verseuse 4 est retirée du socle 3 ou mise en place sur le socle 3, les moyens de retenue supérieurs 122, les moyens d'appui latéraux 138, et le moyen d'appui supérieur 155 permettent de maintenir le porte filtre 13 dans le logement de porte filtre 12 et d'éviter la rupture du joint liquide disposé dans la zone annulaire de rétention d'eau 80.

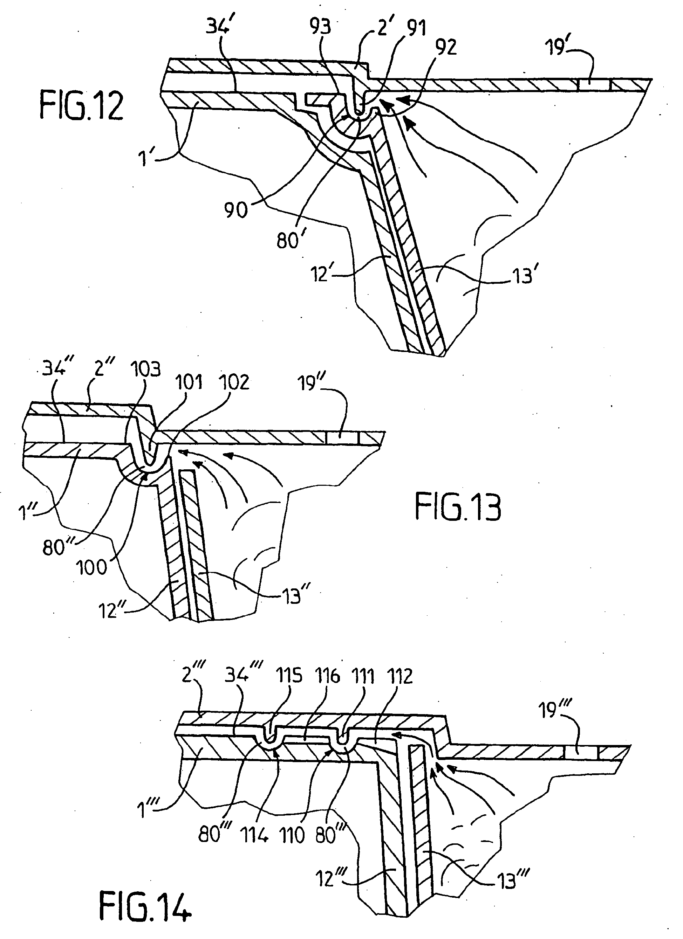

Trois variantes de réalisation sont illustrées de manière schématique aux figures 12 à 14, la douchette n'étant pas représentée, seule l'ouverture 19', 19", 19"' ménagée dans la face inférieure du couvercle 2', 2", 2''' étant représentée.

Une première variante de réalisation est illustrée à la figure 12. La zone annulaire de rétention d'eau 80' est formée par une rigole annulaire 90 ménagée sur le bord supérieur du porte filtre 13'. Une nervure annulaire 91 issue de la face inférieure du couvercle 2' vient se loger dans la rigole annulaire 90. La rigole annulaire 90 présente une paroi périphérique intérieure 92 plus basse que la paroi périphérique extérieure 93, pour permettre le recyclage de l'eau contenue dans la rigole annulaire 90 dans le porte filtre 13' lorsque le couvercle 2' est relevé. La paroi périphérique extérieure 93 est au même niveau que la paroi supérieure 34' du boîtier 1. Le porte filtre 13' est logé dans le logement de porte filtre 12' ménagé dans la paroi supérieure 34'.

Une deuxième variante de réalisation est illustrée à la figure 13. La zone annulaire de rétention d'eau 80" est formée par une rigole annulaire 100 ménagée sur la paroi supérieure 34" du boîtier 1" autour du logement de porte filtre 12". Une nervure annulaire 101 issue de la face inférieure du couvercle 2" vient se loger dans la rigole annulaire 100. La rigole annulaire 100 présente une paroi périphérique intérieure 102 plus basse que le bord supérieur 103 du boîtier 1", pour permettre le recyclage de l'eau contenue dans la rigole annulaire 100 dans le logement de porte filtre 12" ou dans le porte filtre 13" lorsque le couvercle 2' est relevé.

Une troisième variante de réalisation est illustrée à la figure 14. La zone annulaire de rétention d'eau 80"' comporte une rigole annulaire 110 ménagée sur la paroi supérieure 34"' du boîtier 1''' autour du logement de porte filtre 12"'. Une nervure annulaire 111 issue de la face inférieure du couvercle 2''' vient se loger dans la rigole annulaire 110. Un conduit 112 est ménagé dans la paroi supérieure 34"' jusqu'au logement de porte filtre 12"'. Le conduit 112 permet le recyclage de l'eau contenue dans la rigole annulaire 110 dans le porte filtre 13"' lorsque le couvercle 2''' est relevé. La zone annulaire de rétention d'eau 80"' comporte une autre rigole annulaire 114 ménagée sur le bord supérieur du boîtier 1 "' autour de la rigole annulaire 110. Une nervure annulaire 115 issue de la face inférieure du couvercle 2" vient se loger dans la rigole annulaire 114. Un conduit 116 est ménagé dans la paroi supérieure 34"' du boîtier 1 "' entre la rigole annulaire 114 et la rigole annulaire 110.

Tel que bien visible aux figures, le boîtier 1 ; 1' ; 1'' ; 1''' comporte une paroi annulaire agencée à distance et en regard d'une paroi annulaire du couvercle 2 ; 2' ; 2" ; 2''' lorsque le couvercle est rabattu sur le boîtier, la paroi annulaire du boîtier et la paroi annulaire du couvercle délimitant la zone annulaire de rétention d'eau 80 ; 80' ; 80" ; 80'''.

Selon la première forme de réalisation illustrée aux figures 1 à 11, la zone annulaire de rétention d'eau 80 est délimitée latéralement d'une part par la paroi annulaire du boîtier 1 et d'autre part par la paroi annulaire du couvercle 2. La paroi annulaire du boîtier 1 est avantageusement agencée autour de la paroi annulaire du couvercle 2. Tel que représenté aux figures, la zone de rétention d'eau est tronconique, la paroi annulaire du boîtier 1 présentant une pente moins inclinée que la paroi annulaire du couvercle 2.

Selon la deuxième forme de réalisation illustrée aux figures 12, 13 et 14, la zone annulaire de rétention d'eau 80' ; 80" ; 80"' est la paroi annulaire du boîtier 1' ; 1" ; 1''' formant une rigole annulaire 90 ; 100 ; 110, la paroi annulaire du couvercle 2' ; 2" ; 2''' formant une nervure annulaire 91 ; 101 ; 111 plongeant dans ladite rigole annulaire, 90 ; 100 ; 110.

A titre de variante complémentaire pour l'exemple de réalisation illustré aux figures 1 à 11, la zone annulaire de rétention d'eau 80 n'est pas nécessairement formée entre le bossage 18 du couvercle 2 et la paroi intérieure du porte filtre 13, mais pourrait être formée entre le bossage 18 du couvercle 2 et la paroi intérieure du logement de porte filtre 12, si la hauteur du porte filtre 13 est plus réduite ou si le logement de porte filtre 12 est utilisé sans porte filtre. La zone annulaire de rétention d'eau 80 pourrait aussi être formée entre le couvercle 2 et une paroi extérieure du porte filtre 13. Les ouvertures de sortie de vapeur 76 peuvent déboucher sur une paroi latérale du couvercle 2. La douchette 14 peut notamment comporter une ou plusieurs ouvertures d'entrée de vapeur 75, une ou plusieurs sorties de vapeur 76, un ou plusieurs passages de vapeur 73, ainsi qu'une ou plusieurs ouvertures de sortie 16.

A titre de variante complémentaire, la liaison entre le conduit ascendant 10 et la douchette 14 ne comporte pas nécessairement un orifice 31 agencé en regard d'une paroi latérale du boîtier 1, mais peut par exemple consister en une charnière tubulaire.

A titre de variante complémentaire le réservoir d'eau 8 peut être disposé hors du boîtier 1 et/ou être amovible par rapport au boîtier 1.

A titre de variante complémentaire les moyens de verrouillage du porte filtre 13 dans le logement de porte filtre 12 pourraient être supprimés.

A titre de variante complémentaire d'autres moyens de verrouillage du porte filtre 13 dans le logement de porte filtre 12 pourraient être envisagés.

A titre de variante complémentaire un verrouillage du couvercle 2 sur le boîtier 1 pourrait être envisagé.

La présente invention n'est nullement limitée à l'exemple de réalisation décrit et à ses variantes, mais englobe de nombreuses modifications dans le cadre des revendications.

## Revendications

1. Cafetière filtre comportant un compartiment (23) de préparation de la boisson ménagé dans la face supérieure d'un boîtier (1), un couvercle (2) articulé sur le boîtier (1), le couvercle (2) présentant une ouverture (19) pour l'écoulement de l'eau chaude, l'ouverture (19) étant reliée à une chaudière (9) agencée dans le boîtier (1), l'ouverture (19) étant disposée au dessus du compartiment (23) lorsque le couvercle (2) est rabattu sur le boîtier (1), une zone annulaire de rétention d'eau (80) étant formée entre le boîtier (1) et le couvercle (2) autour de l'ouverture (19), le boîtier (1) comportant une paroi annulaire agencée à distance et en regard d'une paroi annulaire du couvercle (2) lorsque le couvercle (2) est rabattu sur le boîtier (1), la paroi annulaire du boîtier (1) étant agencée autour de la paroi annulaire du couvercle (2), **caractérisée en ce que** la zone annulaire de rétention d'eau (80) est délimitée latéralement d'une part par la paroi annulaire du boîtier (1) et d'autre part par la paroi annulaire du couvercle (2), et **en ce que** la paroi annulaire du boîtier (1) présente une pente moins inclinée que la paroi annulaire du couvercle (2).

2. Cafetière filtre selon la revendication 1, **caractérisée en ce qu'**une chambre de détente (84) est ménagée entre la paroi annulaire du boîtier (1) et la paroi annulaire du couvercle (2) au dessus de la zone annulaire de rétention d'eau (80).

3. Cafetière filtre selon l'une des revendications 1 ou 2, **caractérisée en ce que** le compartiment (23) de préparation de la boisson forme un logement de porte filtre (12) dans lequel est logé un porte filtre (13).

4. Cafetière filtre selon la revendication 3, **caractérisée en ce que** la zone annulaire de rétention d'eau (80) est formée entre le couvercle (2) et le porte filtre (13).

5. Cafetière filtre selon la revendication 4, **caractérisée en ce que** la zone annulaire de rétention d'eau (80) est formée entre un bossage inférieur (18) du couvercle (2) et une paroi intérieure du porte filtre (13).

6. Cafetière filtre selon la revendication 2 et l'une des revendications 3 à 5, **caractérisé en ce que** la chambre de détente (84) est obtenue avec un chanfrein (85) sur le sommet de la paroi intérieure du porte filtre (13).

7. Cafetière filtre comportant un compartiment (23' ; 23" ; 23"') de préparation de la boisson ménagé dans la face supérieure d'un boîtier (1' ; 1" ; 1"'), un couvercle (2' ; 2" ; 2"') articulé sur le boîtier, le couvercle présentant une ouverture (19' ; 19" ; 19"') pour l'écoulement de l'eau chaude, l'ouverture étant reliée à une chaudière (9) agencée dans le boîtier, l'ouverture étant disposée au dessus du compartiment lorsque le couvercle est rabattu sur le boîtier, une zone annulaire de rétention d'eau (80' ; 80" ; 80"') étant formée entre le boîtier (1' ; 1" ; 1"') et le couvercle (2' ; 2" ; 2"') autour de l'ouverture (19' ; 19" ; 19"'), le boîtier (1' ; 1" ; 1"') comportant une paroi annulaire agencée à distance et en regard d'une paroi annulaire du couvercle (2' ; 2" ; 2"') lorsque le couvercle (2' ; 2" ; 2"') est rabattu sur le boîtier (1; 1'; 1" ; 1"'), **caractérisée en ce que** la paroi annulaire du boîtier (1' ; 1" ; 1"') forme une rigole annulaire (90 ; 100 ; 110), la paroi annulaire du couvercle (2' ; 2" ; 2"') formant une nervure annulaire (91 ; 101 ; 111) plongeant dans ladite rigole annulaire (90 ; 100 ; 110), la paroi annulaire du boîtier (1' ; 1" ; 1"') et la paroi annulaire du couvercle (2' ; 2" ; 2"') délimitant la zone annulaire de rétention d'eau (80 ; 80' ; 80").

8. Cafetière filtre selon la revendication 7, **caractérisée en ce que** le compartiment (23' ; 23" ; 23"') de préparation de la boisson forme un logement de porte filtre (12' ; 12" ; 12"') dans lequel est logé un porte filtre (13' ; 13" ; 13"').

9. Cafetière filtre selon la revendication 8, **caractérisée en ce que** la zone annulaire de rétention d'eau (80') est formée entre le couvercle (2') et le porte filtre (13 ; 13').

10. Cafetière filtre selon la revendication 8, **caractérisée en ce que** la zone annulaire de rétention d'eau (80") est formée entre le couvercle (2") et le logement de porte filtre (12").

11. Cafetière filtre selon l'une des revendications 7 ou 8, **caractérisée en ce que** la zone annulaire de rétention d'eau (80"') est formée entre le couvercle (2"') et une paroi supérieure (34"') du boîtier (1"').

12. Cafetière filtre selon l'une des revendications 1 à 11, **caractérisée en ce qu'**une douchette (14) agencée dans le couvercle (2) comporte une ouverture de sortie (16) agencée en regard de l'ouverture (19) du couvercle (2).

13. Cafetière filtre selon la revendication 12 **caractérisée en ce que** la douchette (14) comporte une chambre d'évacuation de vapeur (72) agencée autour d'une chambre de sortie (70) d'eau chaude dans laquelle est ménagée l'ouverture de sortie (16), la chambre d'évacuation de vapeur (72) comportant une ouverture d'entrée de vapeur (75) agencée sur la face inférieure du couvercle (2) et une ouverture de sortie de vapeur (76).

14. Cafetière filtre selon la revendication 13 **caractérisée en ce que** la chambre de sortie (70) d'eau chaude est reliée à la chambre d'évacuation de vapeur (75) par un passage de vapeur (73).

15. Cafetière filtre selon l'une des revendications 1 à 14, **caractérisée en ce que** la face supérieure du boîtier (1) comporte un logement de filtres (24) agencé à l'extérieur de la zone annulaire de rétention d'eau (80).

16. Cafetière filtre selon l'une des revendications 1 à 15, **caractérisée en ce qu'**elle comporte un réservoir d'eau (8) alimentant la chaudière (9).

17. Cafetière filtre selon la revendication 15, **caractérisée en ce qu'**elle comporte un réservoir d'eau (8) alimentant la chaudière (9), et **en ce que** le compartiment (23) de préparation de la boisson est agencé entre le logement de filtres (24) et le réservoir d'eau (8).

18. Cafetière filtre selon l'une des revendications 16 ou 17, **caractérisée en ce qu'**une embouchure de remplissage (21) est ménagée dans la face supérieure du boîtier (1) au dessus du réservoir d'eau (8).

19. Cafetière filtre selon l'une des revendications 1 à 18, **caractérisée en ce qu'**une embouchure de remplissage (21) est ménagée dans la face supérieure du boîtier (1) au dessus d'un réservoir d'eau (8) alimentant la chaudière (9), l'embouchure de remplissage (21) étant agencée à l'extérieur de la zone annulaire de rétention d'eau (80), la face supérieure du boîtier (1) comportant un logement de filtres (24) agencé à l'extérieur de la zone annulaire de rétention d'eau (80), le compartiment (23) de préparation de la boisson étant agencé entre le logement de filtres (24) et l'embouchure de remplissage (21).

20. Cafetière filtre selon la revendication 19, **caractérisée en ce que** le couvercle (2) comporte une articulation (25) sur le boîtier (1) adjacente à l'embouchure de remplissage (21) et au logement de filtres (24).

21. Cafetière filtre selon l'une des revendications 18 à 20, **caractérisée en ce que** l'embouchure de remplissage (21) est agencée à l'extérieur de la zone annulaire de rétention d'eau (80).

22. Cafetière filtre selon l'une des revendications 1 à 21, **caractérisée en ce** la face supérieure du boîtier (1) comporte un logement d'accessoire (22) agencé entre un conduit ascendant (10) issu de la chaudière (9) et le compartiment (23) de préparation de la boisson, le logement d'accessoire (22) étant agencé à l'extérieur de la zone annulaire de rétention d'eau (80).

23. Cafetière filtre selon l'une des revendications 16 à 21, **caractérisée en ce qu'**elle comporte un logement d'accessoire (22) agencé au dessus du réservoir d'eau (8), le logement d'accessoire (22) étant agencé à l'extérieur de la zone annulaire de rétention d'eau (80).

## Claims

1. A filter coffee machine including a compartment (23) for preparing the beverage, which compartment is provided in the top face of a housing (1), and a lid (2) hinged to the housing (1), the lid (2) being provided with an opening (19) for allowing hot water to flow through, the opening (19) being connected to a boiler (9) arranged in the housing (1), the opening (19) being placed above the compartment (23) when the lid (2) is closed on the housing (1), a water retention annular zone (80) being formed between the housing (1) and the lid (2) around the opening (19), the housing (1) being provided with an annular wall spaced apart from and facing an annular wall of the lid (2) when the lid (2) is closed on the housing (1), the annular wall of the housing (1) being arranged around the annular wall of the lid (2), said filter coffee machine being **characterized in that** the water retention annular zone (80) is defined laterally on one side by the annular wall of the housing (1) and on the other side by the annular wall of the lid (2), and **in that** the annular wall of the housing (1) presents a slope that is inclined less steeply than the annular wall of the lid (2).

2. A filter coffee machine according to claim 1, **characterized in that** an expansion chamber (84) is provided between the annular wall of the housing (1) and the annular wall of the lid (2), above the water retention annular zone (80).

3. A filter coffee machine according to claim 1 or claim 2, **characterized in that** the compartment (23) for preparing the beverage forms a filter holder recess (12) in which a filter holder (13) is received.

4. A filter coffee machine according to claim 3, **characterized in that** the water retention annular zone (80) is formed between the lid (2) and the filter holder (13).

5. A filter coffee machine according to claim 4, **characterized in that** the water retention annular zone (80) is formed between a bottom projection (18) of the lid (2) and an inside wall of the filter holder (13).

6. A filter coffee machine according to claim 2 and to any one of claims 3 to 5, **characterized in that** the expansion chamber (84) is obtained by means of a bevel (85) on the top of the inside wall of the filter holder (13).

7. A filter coffee machine including a compartment (23'; 23"; 23"') for preparing the beverage, which compartment is provided in the top face of a housing (1'; 1 "; 1 "'), and a lid (2'; 2"; 2"') hinged to the housing, the lid being provided with an opening (19'; 19"; 19"') for allowing hot water to flow through, the opening being connected to a boiler (9) arranged in the housing, the opening being placed above the compartment when the lid is closed on the housing, a water retention annular zone (80'; 80"; 80"') being formed between the housing (1'; 1"; 1"') and the lid (2'; 2"; 2"') around the opening (19'; 19"; 19"'), the housing (1'; 1 "; 1 "') being provided with an annular wall spaced apart from and facing an annular wall of the lid (2'; 2"; 2"') when the lid (2'; 2"; 2"') is closed on the housing (1'; 1"; 1"'), said filter coffee machine being **characterized in that** the annular wall of the housing (1'; 1"; 1"') forms an annular channel (90; 100; 110), the annular wall of the lid (2'; 2"; 2"') forming an annular rib (91; 101; 111) extending into said annular channel (90; 100; 110), the annular wall of the housing (1'; 1 "; 1 "') and the annular wall of the lid (2'; 2"; 2"') defining the water retention annular zone (80; 80'; 80"').

8. A filter coffee machine according to claim 7, **characterized in that** the compartment (23'; 23"; 23"') for preparing the beverage forms a filter holder recess (12'; 12"; 12"') in which a filter holder (13'; 13"; 13"') is received.

9. A filter coffee machine according to claim 8, **characterized in that** the water retention annular zone (80') is formed between the lid (2') and the filter holder (13; 13').

10. A filter coffee machine according to claim 8, **characterized in that** the water retention annular zone (80") is formed between the lid (2") and the filter holder recess (12").

11. A filter coffee machine according to claim 7 or claim 8, **characterized in that** the water retention annular zone (80"') is formed between the lid (2"') and a top wall (34"') of the housing (1"').

12. A filter coffee machine according to any one of claims 1 to 11, **characterized in that** a spray head (14) arranged in the lid (2) is provided with an outlet opening (16) arranged facing the opening (19) of the lid (2).

13. A filter coffee machine according to claim 12, **characterized in that** the spray head (14) includes a steam discharge chamber (72) arranged around a hot water outlet chamber (70) in which the outlet opening (16) is provided, the steam discharge chamber (72) having a steam inlet opening (75) arranged in the bottom face of the lid (2) and a steam outlet opening (76).

14. A filter coffee machine according to claim 13, **characterized in that** the hot water outlet chamber (70) is connected to the steam discharge chamber (75) via a steam passage (73).

15. A filter coffee machine according to any one of claims 1 to 14, **characterized in that** the top face of the housing (1) is provided with a filter stowage recess (24) arranged outside the water retention annular zone (80).

16. A filter coffee machine according to any one of claims 1 to 15, **characterized in that** it includes a water reservoir (8) for feeding the boiler (9).

17. A filter coffee machine according to claim 15, **characterized in that** it includes a water reservoir (8) for feeding the boiler (9), and **in that** the compartment (23) for preparing the beverage is arranged between the filter stowage recess (24) and the water reservoir (8).

18. A filter coffee machine according to claim 16 or claim 17, **characterized in that** a filler mouth (21) is provided in the top face of the housing (1) above the water reservoir (8).

19. A filter coffee machine according to any one of claims 1 to 18, **characterized in that** a filler mouth (21) is provided in the top face of the housing (1) above a water reservoir (8) for feeding the boiler (9), the filler mouth (21) being arranged outside the water retention annular zone (80), the top face of the housing (1) being provided with a filter stowage recess (24) arranged outside the water retention annular zone (80), the compartment (23) for preparing the beverage being arranged between the filter stowage recess (24) and the filler mouth (21).

20. A filter coffee machine according to claim 19, **characterized in that** the lid (2) is provided with a hinge mounting (25) for hinging it to the housing (1), which hinge mounting is adjacent to the filler mouth (21) and to the filter stowage recess (24).

21. A filter coffee machine according to any one of claims 18 to 20, **characterized in that** the filler mouth (21) is arranged outside the water retention annular zone (80).

22. A filter coffee machine according to any one of claims 1 to 21, **characterized in that** the top face of the housing (1) is provided with an accessory stowage recess (22) arranged between a riser duct (10) from the boiler (9) and the compartment (23) for preparing the beverage, the accessory stowage recess (22) being arranged outside the water retention annular zone (80).

23. A filter coffee machine according to any one of claims 16 to 21, **characterized in that** it is provided with an accessory recess (22) arranged above the water reservoir (8), the accessory recess (22) being arranged outside the water retention annular zone (80).

## Patentansprüche

1. Filterkaffeemaschine mit einer Kammer (23) zur Zubereitung des Getränks, welche in der Oberseite eines Gehäuses (1) ausgebildet ist, mit einem gelenkig am Gehäuse (1) angebrachten Deckel (2), wobei der Deckel (2) eine Öffnung (19) für das Abfließen des warmen Wassers aufweist, die Öffnung (19) mit einem im Gehäuse (1) angeordneten Kessel (9) verbunden ist, die Öffnung (19) über der Kammer (23) angeordnet ist, wenn der Deckel (2) auf dem Gehäuse (1) heruntergeklappt ist, zwischen dem Gehäuse (1) und dem Deckel (2) um die Öffnung (19) herum ein ringförmiger Wasserrückhaltebereich (80) ausgebildet ist, das Gehäuse (1) eine ringförmige Wand aufweist, die von einer ringförmigen Wand des Deckels (2) beabstandet ist und dieser gegenüberliegt, wenn der Deckel (2) auf dem Gehäuse (1) heruntergeklappt ist, und die ringförmige Wand des Gehäuses (1) um die ringförmige Wand des Deckels (2) herum angeordnet ist, **dadurch gekennzeichnet, dass** der ringförmige Wasserrückhaltebereich (80) seitlich einerseits durch die ringförmige Wand des Gehäuses (1) und andererseits durch die ringförmige Wand des Deckels (2) begrenzt ist und die ringförmige Wand des Gehäuses (1) eine geringere Neigung als die ringförmige Wand des Deckels (2) aufweist.

2. Filterkaffeemaschine nach Anspruch 1, **dadurch gekennzeichnet, dass** eine Entspannungskammer (84) zwischen der ringförmigen Wand des Gehäuses (1) und der ringförmigen Wand des Deckels (2) über dem ringförmigen Wasserrückhaltebereich (80) ausgebildet ist.

3. Filterkaffeemaschine nach Anspruch 1 oder 2, **dadurch gekennzeichnet, dass** die Kammer (23) zur Zubereitung des Getränks eine Filterträgeraufnahme (12) bildet, in der ein Filterträger (13) angeordnet ist.

4. Filterkaffeemaschine nach Anspruch 3, **dadurch gekennzeichnet, dass** der ringförmige Wasserrückhaltebereich (80) zwischen dem Deckel (2) und dem Filterträger (13) ausgebildet ist.

5. Filterkaffeemaschine nach Anspruch 4, **dadurch gekennzeichnet, dass** der ringförmige Wasserrückhaltebereich (80) zwischen einem unteren Vorsprung (18) des Deckels (2) und einer Innenwand des Filterträgers (13) ausgebildet ist.

6. Filterkaffeemaschine nach Anspruch 2 und einem der Ansprüche 3 bis 5, **dadurch gekennzeichnet, dass** die Entspannungskammer (84) mit einer Abschrägung (85) am oberen Teil der Innenwand des Filterträgers (13) erhalten wird.

7. Filterkaffeemaschine mit einer Kammer (23'; 23"; 23"') zur Zubereitung des Getränks, welche in der Oberseite eines Gehäuses (1'; 1"; 1"') ausgebildet ist, mit einem gelenkig am Gehäuse angebrachten Deckel (2'; 2"; 2"'), wobei der Deckel eine Öffnung (19'; 19"; 19"') für das Abfließen des warmen Wassers aufweist, die Öffnung mit einem im Gehäuse angeordneten Kessel (9) verbunden ist, die Öffnung über der Kammer angeordnet ist, wenn der Deckel auf dem Gehäuse heruntergeklappt ist, zwischen dem Gehäuse (1'; 1 "; 1"') und dem Deckel (2'; 2"; 2"') um die Öffnung (19'; 19"; 19"') herum ein ringförmiger Wasserrückhaltebereich (80'; 80"; 80"') ausgebildet ist, das Gehäuse (1'; 1 "; 1"') eine ringförmige Wand aufweist, die von einer ringförmigen Wand des Deckels (2'; 2"; 2"') beabstandet ist und dieser gegenüberliegt, wenn der Deckel (2'; 2"; 2"') auf dem Gehäuse (1; 1'; 1'; 1"') heruntergeklappt ist, **dadurch gekennzeichnet, dass** die ringförmige Wand des Gehäuses (1'; 1 "; 1"') eine ringförmige Rinne (90; 100; 110) bildet, wobei die ringförmige Wand des Deckels (2'; 2"; 2"') eine ringförmige Rippe (91; 101; 111) bildet, die in die ringförmige Rinne (90; 100; 110) taucht, wobei die ringförmige Wand des Gehäuses (1'; 1"; 1"') und die ringförmige Wand des Deckels (2'; 2"; 2"') den ringförmigen Wasserrückhaltebereich (80; 80'; 80") begrenzen.

8. Filterkaffeemaschine nach Anspruch 7, **dadurch gekennzeichnet, dass** die Kammer (23'; 23"; 23"') zur Zubereitung des Getränks eine Filterträgeraufnahme (12'; 12"; 12"') bildet, in der ein Filterträger (13'; 13"; 13"') angeordnet ist.

9. Filterkaffeemaschine nach Anspruch 8, **dadurch gekennzeichnet, dass** der ringförmige Wasserrückhaltebereich (80') zwischen dem Deckel (2') und dem Filterträger (13; 13') ausgebildet ist.

10. Filterkaffeemaschine nach Anspruch 8, **dadurch gekennzeichnet, dass** der ringförmige Wasserrückhaltebereich (80") zwischen dem Deckel (2") und der Filterträgeraufnahme (12") ausgebildet ist.

11. Filterkaffeemaschine nach Anspruch 7 oder 8, **dadurch gekennzeichnet, dass** der ringförmige Wasserrückhaltebereich (80"') zwischen dem Deckel (2"') und einer oberen Wand (34"') des Gehäuses (1"') ausgebildet ist.

12. Filterkaffeemaschine nach einem der Ansprüche 1 bis 11, **dadurch gekennzeichnet, dass** eine im Deckel (2) angeordnete kleine Sprüheinrichtung (14) eine Austrittsöffnung (16) aufweist, die gegenüber der Öffnung (19) des Deckels (2) angeordnet ist.

13. Filterkaffeemaschine nach Anspruch 12, **dadurch gekennzeichnet, dass** die kleine Sprüheinrichtung (14) eine Dampfablasskammer (72) aufweist, die um eine Warmwasseraustrittskammer (70) herum angeordnet ist, in welcher die Austrittsöffnung (16) ausgebildet ist, wobei die Dampfablasskammer (72) eine an der Unterseite des Deckels (2) ausgebildete Dampfeintrittsöffnung (75) und eine Dampfaustrittsöffnung (76) aufweist.

14. Filterkaffeemaschine nach Anspruch 13, **dadurch gekennzeichnet, dass** die Warmwasseraustrittskammer (70) über einen Dampfdurchgang (73) mit der Dampfablasskammer (72) verbunden ist.

15. Filterkaffeemaschine nach einem der Ansprüche 1 bis 14, **dadurch gekennzeichnet, dass** die Oberseite des Gehäuses (1) eine Filteraufnahme (24) aufweist, die außerhalb des ringförmigen Wasserrückhaltebereichs (80) angeordnet ist.

16. Filterkaffeemaschine nach einem der Ansprüche 1 bis 15, **dadurch gekennzeichnet, dass** sie einen Wasserbehälter (8) aufweist, der den Kessel (9) speist.

17. Filterkaffeemaschine nach Anspruch 15, **dadurch gekennzeichnet, dass** sie einen Wasserbehälter (8) aufweist, der den Kessel (9) speist, und die Kammer (23) zur Zubereitung des Getränks zwischen der Filteraufnahme (24) und dem Wasserbehälter (8) angeordnet ist.

18. Filterkaffeemaschine nach Anspruch 16 oder 17, **dadurch gekennzeichnet, dass** in der Oberseite des Gehäuses (1) über dem Wasserbehälter (8) ein Einfülleinlass (21) ausgebildet ist.

19. Filterkaffeemaschine nach einem der Ansprüche 1 bis 18, **dadurch gekennzeichnet, dass** in der Oberseite des Gehäuses (1) über einem Wasserbehälter (8), der den Kessel (9) speist, ein Einfülleinlass (21) ausgebildet ist, wobei der Einfülleinlass (21) außerhalb des ringförmigen Wasserrückhaltebereichs (80) angeordnet ist, die Oberseite des Gehäuses (1) eine Filteraufnahme (24) aufweist, die außerhalb des ringförmigen Wasserrückhaltebereichs (80) angeordnet ist, und die Kammer (23) zur Zubereitung des Getränks zwischen der Filteraufnahme (24) und dem Einfülleinlass (21) angeordnet ist.

20. Filterkaffeemaschine nach Anspruch 19, **dadurch gekennzeichnet, dass** der Deckel (2) eine gelenkige Befestigung (25) am Gehäuse (1) aufweist, die an den Einfülleinlass (21) und an die Filteraufnahme (24) angrenzt.

21. Filterkaffeemaschine nach einem der Ansprüche 18 bis 20, **dadurch gekennzeichnet, dass** der Einfülleinlass (21) außerhalb des ringförmigen Wasserrückhaltebereichs (80) angeordnet ist.

22. Filterkaffeemaschine nach einem der Ansprüche 1 bis 21, **dadurch gekennzeichnet, dass** die Oberseite des Gehäuses (1) eine Zubehöraufnahme (22) aufweist, die zwischen einem vom Kessel (9) ausgehenden Steigrohr (10) und der Kammer (23) zur Zubereitung des Getränks angeordnet ist, wobei die Zubehöraufnahme (22) außerhalb des ringförmigen Wasserrückhaltebereichs (80) angeordnet ist.

23. Filterkaffeemaschine nach einem der Ansprüche 16 bis 21, **dadurch gekennzeichnet, dass** sie eine Zubehöraufnahme (22) aufweist, die über dem Wasserbehälter (8) angeordnet ist, wobei die Zubehöraufnahme (22) außerhalb des ringförmigen Wasserrückhaltebereichs (80) angeordnet ist.
